# EUROPEAN PATENT APPLICATION

(11) **EP 0 721 276 A1**
(43) Date of publication of application: **10.07.1996**
(21) Application number: 95120292.8
(22) Date of filing: 21.12.1995
(51) Int. Cl.: H04M 11/06

(54) **Modem system**

(30) Priority: 27.12.1994 US 364901
(71) Applicant: ROCKWELL INTERNATIONAL CORPORATION, Seal Beach, California 90740-8250 (US)
(72) Inventor: Dederich, Darrell J., Costa Mesa, California 92627 (US)
(74) Representative: Wagner, Karl H., Dipl.-Ing.

(57) **Abstract**

The invention comprises a modem system for connecting computer systems and peripherals to telephone networks, such as the public switched telephone network (PSTN). The modem system contains a data access arrangement unit (100), referred to as a DAA unit, and a modem unit (110). The DAA unit is directly connected to a telephone line (105). Likewise, the modem unit is directly connected to a computer system or a peripheral (120) such as a printer or a fax machine. The digital interface between the DAA unit and the modem unit is infrared, radio frequency, LASER, or ultrasound. The DAA unit can be supplied by either direct current supplied by the telephone network, or can be supplied by an isolated power supply.

## Description

### 1. BACKGROUND OF THE INVENTION

This invention relates in general to modems and data access arrangements. More particularly this invention relates to a wireless modem system.

When a computer is connected to a telephone network, care must be taken so that high voltages from the computer do not enter the telephone network. If a defective computer imparts high voltages to a telephone network, the network could be seriously damaged. Typically, a modem with a device that is commonly called a data access arrangement is installed between the telephone network and the computer. The data access arrangement provides the needed electrical isolation between the telephone network and the computer.

### 2. SUMMARY OF THE INVENTION

The invention relates to a modem system for connecting computer systems and peripherals to telephone networks, such as the public switched telephone network (PSTN). The modem system contains a data access arrangement unit, referred to as a DAA unit, and a modem unit. The DAA unit is directly connected a telephone line. Likewise, the modem unit is directly connected to a computer system or a peripheral such as a printer or a fax machine.

The digital interface between the DAA unit and the modem unit is wireless, *e.g*., infrared, radio frequency, laser, or ultrasound. This wireless interface provides the required electrical isolation between the computer and the telephone network. The DAA unit can be supplied by either direct current supplied by the telephone network, or it can be supplied by an isolated power supply.

### 3. BRIEF DESCRIPTION OF THE DRAWINGS

The invention is described in detail with reference to the accompanying drawing, in which:

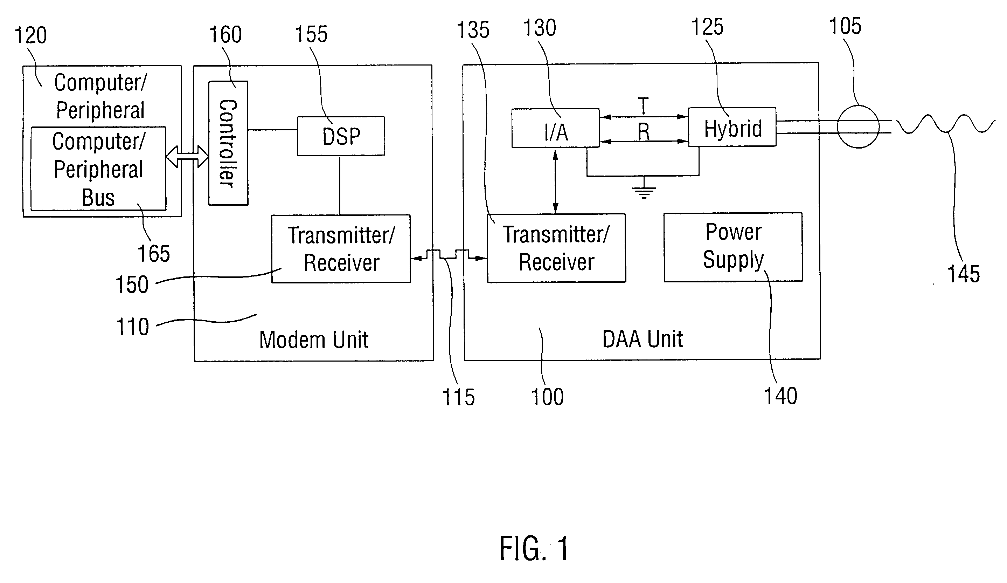

Fig. 1 is a block diagram of a modem system comprising a DAA unit and a modem unit.

### 4. DETAILED DESCRIPTION OF THE SPECIFIC EMBODIMENTS

### 4.1 The Modem System

Referring to Figure 1, the DAA unit 100 is connected to the telephone network 105 by conventional wiring. The DAA unit 100 interfaces with the modem unit 110 via a wireless digital signal 115. The modem unit 110 is directly connected to the computer/peripheral 120 via conventional wiring or cabling. It will be appreciated by those of ordinary skill having the benefit of this disclosure that either or both of the DAA unit 100 and the modem unit 110 may take the form of conventional plug-in circuit boards.

### 4.2 The DAA Unit

Referring again to Fig. 1, the DAA unit 100 may contain a conventional "hybrid device" 125 for converting a two-wire signal to a four-wire signal or vice versa, a conventional integrated analog-to-digital and digital-to-analog converter (I/A) 130, a conventional transmitter/receiver 135, and optionally a conventional isolated power supply 140. As noted above, the DAA unit 100 is directly connected to the telephone network 105.

When an analog signal 145 is present on the two-wire telephone line, shown as 105, the analog signal 145 is converted from a two-wire signal to a four-wire signal by the hybrid device 125. The hybrid device 125 may also perform conventional signal conditioning on the analog signal 145. The output from the hybrid device 125 is then converted into a digital format by the I/A 130. The digital representation of the processed analog signal is then input into the transmitter/receiver 135. The transmitter/receiver 135 transmits the digital representation of the processed telephone signal to the modem unit 110 by infrared (IR), radio frequency (RF), laser, ultrasound, or similar wireless signal 115.

On the other hand, when the transmitter/receiver 135 of the DAA unit 100 receives a wireless signal 115 from the modem unit 110, it is input to the I/A 130. The I/A 130 converts the received signal from digital to analog. The analog output of the I/A 130 is then transformed from a four-wire signal into a two-wire signal by the hybrid device 125. The hybrid device 125 may also perform conventional signal conditioning. Finally, the two-wire signal is placed on the telephone network 105 in analog form.

It will be appreciated in hindsight by those of ordinary skill having the benefit of this disclosure that a modem system including a media access unit (MAU), which is similar to the DAA unit 100, can interface with the Integrated Services Digital Network (ISDN). Thus, a modem system including a MAU would provide voltage isolation between a computer or peripheral and the ISDN. Further, such a modem system would eliminate the need to run cables between the ISDN and computer or peripheral.

### 4.3 Modem Unit

Referring again to Fig. 1, in the illustrative embodiment the modem unit 110 includes a transmitter/receiver 150, a digital signal processor (DSP) 155, and a controller 160. When the transmitter/receiver 150 receives a wireless signal 115 from the DAA unit 100, the signal 115 is input to the DSP 155 for conventional signal conditioning and processing. The output of the DSP 155 is input into the controller 160 that controls data flow and optionally data compression to a computer/peripheral bus 165 as well known in the modem arts.

On the other hand, when the controller 160 receives data from the computer/peripheral bus 165, it inputs the data into the DSP 155. The DSP 155 then conditions and processes the data. The conditioned data is then input into the transmitter/receiver 150 for wireless transmission to the DAA unit 100.

### 5. SOME ADVANTAGES OF THE INVENTION

An advantage of the illustrative embodiment is that it electrically isolates the computer and the modem from the telephone network. Without such isolation, a faulty computer or modem could allow high voltage alternating current to enter the telephone network and injure telephone users and repairmen. Thus, instead of using large and expensive components to isolate the computer and modem from the telephone network, the illustrative embodiment uses air as an electrical isolator between the DAA unit and the modem unit. This is particularly advantageous in Europe where very large voltage isolation requirements exist: while a modem/DAA arrangement in accordance with the invention can easily be fit into PCMCIA formats, there is no current method to meet European voltage isolation requirements within the PCMCIA formats.

Still another advantage is that the illustrative embodiment eliminates the need to run cables from the PSTN to the modem. Further, the wireless interface allows computers and peripherals with wireless modems to be portable.

While the invention has been described in conjunction with preferred embodiments thereof, it is obvious that other modifications and changes therein in addition to the examples discussed above may be made by those skilled in the art without departing from the spirit and scope of the invention.
It should be noted that the objects and advantages of the invention may be attained by means of any compatible combination(s) particularly pointed out in the items of the following summary of the invention and the appended claims.

### SUMMARY OF INVENTION

### I claim:

1. A modem system for connecting a computer system to the United States public switched telephone network (PSTN), said modem system comprising:
   (a) a data access arrangement unit, referred to as a DAA unit, connected to said telephone network and having a wireless infrared (IR) digital interface, referred to as a DAA wireless interface, and either or both of a digital-to-analog (D/A) converter and an analog-to-digital (A/D) converter, said DAA system powered by direct current supplied by the telephone network; and
   (b) a modem unit connected to said computer system and having a wireless digital interface that is signal-compatible with said DAA wireless interface.
2. A modem system for connecting a computer system to a telephone network, said modem system comprising:
   (a) a data access arrangement unit, referred to as a DAA unit, connected to said telephone network and having a wireless digital interface referred to as a DAA wireless interface; and
   (b) a modem unit connected to said computer system and having a wireless digital interface that is signal-compatible with said DAA wireless interface.
3. The modem system wherein said DAA wireless interface is infrared (IR).
4. The modem system wherein said DAA wireless interface is a radio frequency (RF) interface.
5. The modem system wherein said DAA wireless interface is a laser interface.
6. The modem system wherein said DAA wireless interface is an ultrasound interface.
7. The modem system wherein said telephone network is the United States public switched telephone network (PSTN).
8. The modem system wherein said DAA system is powered by direct current supplied by the telephone network.
9. The modem system wherein said DAA system is powered by an external direct current (DC) power supply.
10. The modem system wherein said external direct current (DC) power supply is isolated from its alternating current (AC) power supply.
11. The modem system wherein said DAA system includes either or both of a digital-to-analog (D/A) converter and an analog-to-digital (A/D) converter.
12. A modem unit for connecting a computer to a telephone network via a data access arrangement system, referred to as a DAA system,
   said DAA system having (1) a wireless digital interface for coupling a modem unit to said DAA system and (2) a connection to said telephone network that meets specified telephone system electrical-isolation requirements,
   said modem unit comprising a wireless digital interface that couples said modem unit to the wireless digital interface of said DAA system.
13. The modem unit wherein said DAA system is spatially remote from said modem unit.
14. The modem unit wherein said wireless digital interface is an infrared (IR) interface.
15. The modem unit wherein said wireless digital interface is a radio frequency (RF) interface.
16. The modem unit wherein said wireless digital interface is a laser interface.
17. The modem unit wherein said wireless digital interface is an ultrasonic interface.
18. A peripheral unit having a wireless interface that is signal-compatible with a data access arrangement system selected from a group consisting of the respective DAA systems of items 19 through 25.
19. A data access arrangement unit, referred to as a DAA unit, for connecting a modem unit to a telephone network, said modem unit having a wireless digital interface, said DAA unit comprising a wireless digital interface for coupling said DAA unit to the wireless digital interface of said modem unit.
20. The DAA unit wherein said DAA unit is spatially remote from said modem unit.
21. The DAA unit wherein said wireless digital interface is an infrared (IR) interface.
22. The DAA unit wherein said wireless digital interface is a radio frequency (RF) interface.
23. The DAA unit wherein said wireless digital interface is a laser interface.
24. The DAA unit wherein said wireless digital interface is an ultrasonic interface.
25. The DAA unit wherein said telephone network is the United States public switched telephone network (PSTN).

## Claims

1. A modem system for connecting a digital electronic device to a telephone network, the modem system comprising:
(a) a data access arrangement (DAA) unit, for connection to the telephone network, the DAA unit having a wireless digital interface; and
(b) a modem unit for connection to a computer system, the modem having a wireless digital interface that is signal-compatible with the DAA wireless interface.

2. A modem unit for connecting a computer to a telephone network via a data access arrangement system, referred to as a DAA system,
said DAA system having (1) a wireless digital interface for coupling a modem unit to said DAA system and (2) a connection to said telephone network that meets specified telephone system electrical-isolation requirements, and
said modem unit comprising a wireless digital interface that couples said modem unit to the wireless digital interface of said DAA system.

3. The modem system of claims 1 or 2, wherein the DAA unit is powered by direct current supplied by the telephone network.

4. The modem system of claim 1 or 2, wherein the DAA unit is powered by an external direct current (DC) power supply.

5. The modem of claims 1 or 2, wherein the DAA system is spatially remote from the modem unit.

6. The modem of claims 1, 2, 3, 4, or 5 wherein the DAA wireless interface is infrared (IR).

7. The modem system of claims 1, 2, 3, 4, or 5 wherein the DAA wireless interface is a radio frequency (RF) interface.

8. The modem system of claims 1, 2, 3, 4, or 5 wherein the DAA wireless interface is a laser interface.

9. The modem system of claims 1, 2, 3, 4, or 5 wherein the DAA wireless interface is an ultrasound interface.

10. A data access arrangement (DAA) unit, for connecting a modem unit to a telephone network, the modem unit having a wireless digital interface, and the DAA unit comprising a wireless digital interface for coupling the DAA unit to the wireless digital interface of the modem unit.
